(19) Europäisches Patentamt
European Patent Office
Office européen des brevets

(11) **EP 3 653 882 B1**

(12) **EUROPÄISCHE PATENTSCHRIFT**

(45) Veröffentlichungstag und Bekanntmachung des Hinweises auf die Patenterteilung:
**12.07.2023   Patentblatt 2023/28**

(21) Anmeldenummer: **18207118.3**

(22) Anmeldetag: **19.11.2018**

(51) Internationale Patentklassifikation (IPC):
**F04C 18/16** *(2006.01)*     **F04C 29/02** *(2006.01)*

(52) Gemeinsame Patentklassifikation (CPC):
**F04C 18/16; F04C 29/026**

(54) **VIRTUELLER SENSOR FÜR WASSERANTEIL IM ÖLKREISLAUF**

VIRTUAL SENSOR FOR THE WATER CONTENT IN OIL CIRCUIT

CAPTEUR VIRTUEL DE LA TENEUR EN EAU DANS LE CIRCUIT D'HUILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.05.2020   Patentblatt 2020/21**

(73) Patentinhaber: **Feiler, Wolfgang**
**78467 Konstanz Baden Württenberg (DE)**

(72) Erfinder: **Feiler, Wolfgang**
**78467 Konstanz Baden Württenberg (DE)**

(74) Vertreter: **Heisel, Wolfgang**
**Heisel Patente Marken Designs**
**Hauptstrasse 14**
**8280 Kreuzlingen (CH)**

(56) Entgegenhaltungen:
**EP-A2- 1 475 586**     **WO-A1-02/46617**
**WO-A1-2015/103678**     **DE-A1- 4 313 573**

**Beschreibung**

Die Erfindung betrifft ein Verfahren zum Überwachen eines öleingespritzten Schraubenkompressors, bei dem Öl aus einem Ölabscheidebehälter in einen Verdichtungsraum eines Kompressorblocks zurückgeführt wird, auf einen unbeabsichtigten Kaltlauf, bei dem aufgrund einer zu niedrigen Verdichtungsendtemperatur Kondensation anfällt.

Bei öleingespritzten Schraubenkompressoren wird Umgebungsluft auf einen höheren Druck verdichtet. Der Verdichtungsvorgang findet innerhalb des Schraubenkompressorblocks statt. Dabei entsteht Verdichtungswärme. Damit die Temperatur der Druckluft nicht zu stark ansteigt, wird in den Schraubenkompressorblock Öl eingespritzt. Das Öl nimmt einen Teil der Verdichtungswärme auf und erwärmt sich dabei. Daher kann durch Veränderung von Temperatur und/oder Menge des Öls die Temperatur am Ende des Verdichtungsvorgangs geregelt werden. Diese Temperatur wird als Verdichtungsendtemperatur bezeichnet.

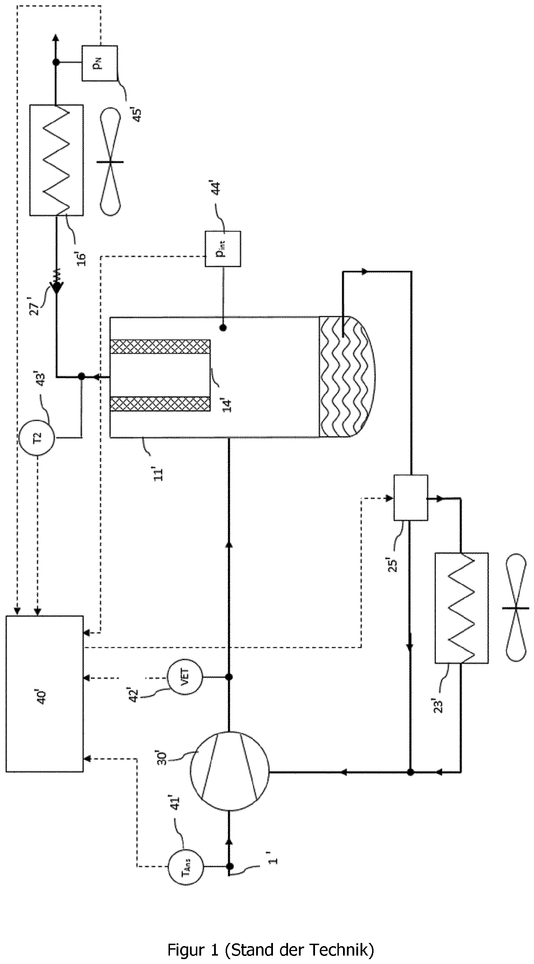

In Figur 1 ist ein vereinfachtes Blockschaltbild eines öleingespritzten Schraubenkompressors dargestellt. Bei der Ansaugstelle 1' wird die Umgebungsluft in den Verdichterblock 30' angesaugt. Mit dem Temperatursensor 41' wird die Ansaugtemperatur $T_{Ans}$ gemessen. Im Verdichterblock 30' wird die Luft verdichtet. Hierbei wird Öl eingespritzt. Das Öl-Luft-Gemisch strömt zum Ölabscheidebehälter. Hier wird das Öl abgeschieden. Das abgeschiedene Öl wird über ein Regelventil 25' entweder direkt oder über einen Ölkühler 23' zum Verdichterblock 30' zurückgeführt und dort erneut eingespritzt. Über das Regelventil 25' kann die Temperatur des eingespritzten Öls beeinflusst und dadurch die mit Sensor 42' gemessene Verdichtungsendtemperatur geregelt werden.

Die verdichtete Luft strömt über den Ölabscheidebehälter 11' und wird über Nachkühler 16' einer Anwendung zugeführt. Die Temperatur der ausströmenden Luft wird mit dem Sensor 43' gemessen.

In der angesaugten atmosphärischen Luft ist Wasserdampf enthalten. Durch Druck- und Temperaturänderung der Luft ändert sich die Masse an Wasser, die maximal dampfförmig vorliegen kann. Wenn im Block und Ölabscheidebehälter mehr Wasser in der Luft enthalten ist, als als Wasserdampf vorliegen kann, kommt es zur Kondensation. Dies kann zu Schäden führen.

Die Verdichtungsendtemperatur wird normalerweise auf einem Wert geregelt, der meist in einem Bereich zwischen 60°C und 100°C liegt. Zur Einstellung der Verdichtungsendtemperatur umfasst der Ölkreislauf einen Ölkühler, dessen Kühlleistung oft noch durch einen ggf. auch in seiner Drehzahl einstellbaren Ventilator beeinflusst werden kann. Wird weniger Kühlleistung gefordert, wird ein Teilstrom des warmen Öls über einen Bypass am Ölkühler vorbeigeführt, so dass letztendlich das Öl mit einer vorbestimmten gewünschten Temperatur in den Schraubenkompressor eingespritzt und die tatsächliche Verdichtungsendtemperatur einer gewünschten Soll-Verdichtungsendtemperatur angenähert wird. Im normalen Betrieb wird die Verdichtungsendtemperatur eher auf eine niedrigere Temperatur eingestellt, um das Öl nicht übermäßig zu schädigen. Auf der anderen Seite darf die Verdichtungsendtemperatur aber auch nicht so niedrig sein, das Kondensat entsteht und sich Wasser im Ölkreislauf anreichert. Insofern wird die Verdichtungsendtemperatur in der Regel auf einen Wert gefahren, bei dem Kondensatbildung mit Sicherheit vermieden ist. Wenn nämlich im Schraubenkompressor und im Ölabscheidebehälter mehr Wasser in der Luft enthalten ist, als als Wasserdampf vorliegen kann, kommt es zur Kondensation bzw. Kondensatbildung. Dies kann zu Schäden führen. Beispielsweise kann im Schraubenkompressor Korrosion auftreten.

Die Aufgabe der vorliegenden Erfindung besteht demgegenüber darin, ein Verfahren vorzuschlagen, das einen öleingespritzten Schraubenkompressor, bei dem Öl aus einem Ölabscheidebehälter in einen Verdichtungsraum zurückgeführt wird, auf Kondensatbildung im Ölkreislauf überwacht.

Diese Aufgabe wird mit einem Verfahren zum Überwachung eines öleingespritzten Schraubenkompressors nach den Merkmalen des Anspruchs 1 und mit einem öleingespritzten Schraubenkompressor nach den Merkmalen des Anspruch 10 gelöst. Vorteilhafte Weiterbildungen sind in den Unteransprüchen angegeben.

Ein Kerngedanke der vorliegenden Erfindung besteht darin, dass für einen Zeitpunkt t ein Wassereintrittsmassenstrom $\dot{m}_{ein}(t)$ und ein Wasseraustrittsmassenstrom $\dot{m}_{aus}(t)$ errechnet bzw. bestimmt wird und aus einer Differenzbildung ein anfallender Kondensatstrom $\Delta\dot{m}_w(t) = \dot{m}_{ein}(t) - \dot{m}_{aus}(t)$ errechnet bzw. bestimmt wird.

Beim Wassereintrittsmassenstrom $\dot{m}_{ein}$ handelt es sich um den Massenstrom des Dampfs, der in der angesaugten Luft enthalten ist.

Beim Wasseraustrittsmassenstrom $\dot{m}_{aus}$ handelt es sich um den Massenstrom des Dampfs, der in der aus dem Ölabscheidebehälter austretenden Luft enthalten ist.

Beim anfallenden Kondensatstrom $\Delta\dot{m}_w$ handelt es sich um die Änderung der im Ölkreislauf enthaltenen Kondensatmasse pro Zeit für einen Zeitpunkt t.

Zwar ist es theoretisch denkbar, unter Kenntnis der absoluten oder der relativen Luftfeuchte den tatsächlich jeweils angesaugten Wassereintrittsmassenstrom zu bestimmen; im vorliegenden Fall wird es aber als besonders günstiges Vorgehen angesehen, unter Annahme von bestimmten Werten für die relative Feuchte, insbesondere unter Annahme von einer relativen Feuchte von 100%, von einem *Worst Case*-Szenario auszugehen und insofern einen von diesem Szenario ausgehenden Wassereintrittsmassenstrom $\dot{m}_{ein}$ anzusetzen. Unter Differenzbildung mit dem Wasseraustrittsmassenstrom wird ein anfallender Kondensatstrom $\Delta\dot{m}_w$ errechnet und insofern eine Art virtueller Sensor für

den anfallenden Kondensatstrom $\Delta \dot{m}_W$ definiert.

Zwar gibt es im Stand der Technik Ansätze, Betrachtungen über Grenztemperaturen bzw. Taupunkttemperaturen anzustellen, allein die Tatsache, dass eine Grenztemperatur bzw. eine Taupunkttemperatur unterschritten ist, liefert aber noch keinerlei Anhaltspunkte darüber, welche Kondensatmasse konkret maximal angefallen sein könnte. Hierzu ist vielmehr der jeweilige Wassereintrittsmassenstrom in die Betrachtung einzubeziehen, in den Größen, wie die Förderkapazität des Schraubenkompressors und die jeweilige Ansaugtemperatur $T_{Ans}$ eingehen. Denn Luft bei 30°C hat bei 100%-iger Luftfeuchte einen wesentlich höheren Betrag an absoluter Feuchte als Luft bei 12°C und 100% relativer Luftfeuchte. Insofern ist ein bloßer Vergleich von Temperaturen mit einer Taupunkttemperatur nicht ausreichend.

Allgemein gilt für feuchte Luft, dass die maximale Wassermasse $m_w$, die pro Luftmasse $m_a$ als Wasserdampf vorliegen kann, sich aus dem Dampfdruck des Wassers bei der aktuellen Temperatur $p_{sat,w}$ (T) und dem Druck p ergibt.

$$\frac{m_W}{m_a} = \frac{p_{sat,w}(T)}{p - p_{sat,w}(T)} \frac{R_W}{R_a},$$

mit $R_w$, $R_a$: Gaskonstanten von Wasser bzw. Luft

Eine Druckerhöhung bewirkt demnach eine Verringerung der maximalen Wassermasse pro Luftmasse. Eine Temperaturerhöhung und damit eine Erhöhung des Dampfdrucks führt zu einer Vergrößerung dieser Wassermasse.

Wenn die angesaugte Wassermasse pro Luftmasse größer ist als die Masse die nach der Ölabscheidung maximal als Dampf in der Druckluft vorliegen kann, bildet sich flüssiges Wasser (Kondensat) im Ölkreislauf (Kompressorblock, Ölabscheidebehälter und Verbindungen mit dazwischen geschalteten Komponenten).

Die Mindesttemperatur, bei der kein Kondensat ausfallen kann, kann an Hand der Eigenschaften der Umgebungsluft (Druck, Temperatur, Feuchte) und des Betriebsdrucks berechnet werden. Der Sollwert für die Verdichtungsendtemperatur sollte also an Hand dieser Mindesttemperatur festgelegt werden. Dies wird in der Schrift WO 200246617 beschrieben. In dieser Schrift wird eine Regelung der Kühlung über die Drehzahl eines Ventillüfters beschrieben. Eine andere Stellgröße könnte ein Regelventil sein, das einen Teil des Öls am Ölkühler vorbei zum Kompressorblock strömen lässt.

In der Praxis wird der Sollwert für die Verdichtungsendtemperatur aber nicht immer erreicht. Beispielsweise ist beim Start eines Schraubenkompressors, der in einer Stillstandsphase abgekühlt ist, eine gewisse Betriebszeit erforderlich bis der Schraubenkompressor ausreichend erwärmt wurde und eine ausreichend hohe Austrittstemperatur erreicht werden kann.

Während der Betriebszeiten, bei denen die Austrittstemperatur zu niedrig ist, fällt Kondensat im Ölabscheidebehälter an. In ungünstigen Fällen kann es trotz einer korrekten Sollwertvorgabe für die Temperaturregelung dazu kommen, dass sich zu viel Kondensat im Öl ansammelt und es dadurch zu Schäden kommt. Solche ungünstigen Fälle könnten zu kurze Lastlaufzeiten sein, die jeweils beendet werden, wenn der Sollwert für die Verdichtungsendtemperatur noch nicht erreicht ist oder sehr niedrige Umgebungsbedingungen, ggf. auch ein Defekt bei Regelungskomponenten.

Aus Druck, Temperatur und relativer Feuchte der Ansaugluft, sowie dem geförderten Luftmassenstrom kann der Massenstrom des angesaugten Wasserdampfs $\dot{m}_{W,ein}$ berechnet werden.

Aus Druck und Temperatur im Ölabscheidebehälter, sowie dem geförderten Luftmassenstrom kann der maximal mögliche Massenstrom des Wasserdampfs $\dot{m}_{W,aus,max}$ aus der Annahme einer relativen Feuchte von 100% berechnet werden.

Wenn Kondensat vorhanden, also die Masse des Kondensats $m_K$ größer null ist oder mehr Wasserdampf in den Schraubenkompressor eintritt als maximal austreten kann, so ist der austretende Wasserdampfstrom $\dot{m}_{W,aus}$ durch den maximal möglichen Strom $\dot{m}_{W,aus,max}$ gegeben. Wenn kein Kondensat vorhanden ist und weniger Wasserdampf in den Kompressor eintritt als maximal austreten kann, ist der austretenden Wasserdampfstrom gleich dem eintretenden:

$$\dot{m}_{W,aus} = \begin{cases} \dot{m}_{W,aus,max}, & \text{für } m_K > 0 \text{ oder } \dot{m}_{W,ein} > \dot{m}_{W,aus,max} \\ \dot{m}_{W,ein}, & \text{sonst} \end{cases}$$

Wenn die Differenz der beiden Massenströme

$$\Delta \dot{m}_W = \dot{m}_{W,ein} - \dot{m}_{W,aus}$$

positiv ist, wird mehr Wasser in den Schraubenkompressor eingetragen als ausgetragen. Wenn $\Delta\dot{m}_w$ dagegen negativ ist, kann mehr Wasser aus dem Schraubenkompressor ausgetragen als eingetragen werden. In letzterem Fall würde bereits kondensiertes Wasser wieder verdunsten.

Insofern wird in einer Weiterbildung der vorliegenden Erfindung aus einer Aufsummierung der über einen jeweiligen Zeitraum anfallenden Kondensatströme eine insgesamt angefallene Kondensatmasse $m_K$ errechnet.

Obwohl für eine Aufsummierung der über einen jeweiligen Zeitraum anfallenden Kondensatströme verschiedene Verfahren denkbar sind, können verschiedene, rechentechnisch leicht handhabbare Verfahren, insbesondere numerische Verfahren herangezogen werden. Vorzugsweise wird eine numerische Integration der Kondensatmassenänderungsrate $\Delta\dot{m}_w(t)$ oder einer analogen Größe über die Zeit durchgeführt.

Beispielsweise wird eine Berechnung wie folgt durchgeführt:
$m_K(t)=m_K(t\text{-}dt)+\Delta\dot{m}_w*dt$ mit $dt = 1s$. Es wird also zu jedem Zeitpunkt einer durch vorgegebene Zeitintervalle strukturierten Abtastung eine Bilanzierung der jeweiligen Kondensatmasse vorgenommen, wobei sich die inkrementelle Erhöhung bzw. Erniedrigung aus einer Differenz des Wassereintrittsmassenstroms $\dot{m}_{ein}$ und des Wasseraustrittsmassenstroms $\dot{m}_{aus}$ ergibt. Ausgehend von der berechneten Kondensatmasse kann beurteilt werden, ob bei dem gegenwärtigen Betrieb die Gefahr von Schäden durch Kondensat besteht.

Bevorzugtermaßen wird von einem bekannten Anfangswert der Kondensatmasse $m_K(t_0)$ durch numerische Integration des Kondensatstroms $\Delta\dot{m}_w$ über der Zeit die insgesamt angefallene Kondensatmasse $m_K(t)$ berechnet.

Konkret kann also, ausgehend von einem bekannten Anfangswert für die Kondensatmasse $m_K(t_0)$, z.B. 0 g bei Inbetriebnahme oder Ölwechsel, durch Integration der Massenstromdifferenz $\Delta\dot{m}_w$ über der Zeit t die Kondensatmasse berechnet werden:

$$m_K(t) = m_K(t_0) + \int_{t_0}^{t} \Delta\dot{m}_w(\tau)\,d\tau$$

Diese Integration kann durch die Steuerung während des Kompressorbetriebs numerisch durchgeführt werden. Beispielsweise kann der Wert für $\Delta\dot{m}_w$ in regelmäßigen Zeitintervallen $\Delta t$ berechnet werden und der neue Wert für die Kondensatmasse $m_K(t)$ jeweils aus dem Wert der Kondensatmasse vom vorhergehenden Zeitpunkt $m_K(t\text{-}\Delta t)$ berechnet werden:

$$m_K(t) = m_K(t - \Delta t) + \Delta\dot{m}_w(t)\Delta t$$

Selbstverständlich könnten auch andere numerische Integrationsverfahren angewendet werden, die z. B. eine variable Schrittweite verwenden und/oder in einem Zeitschritt die Massenstromdifferenz von mehr als einem Zeitpunkt verwenden.

Das erfindungsgemäße Verfahren kann insofern in einer bevorzugten Ausgestaltung vorsehen, dass aus einer Aufsummierung von zwischen jeweils zwei Zeitpunkten erfolgten Kondensatmassenänderungen eine Kondensatmasse $m_K$ errechnet wird, wobei die Kondensatmassenänderung jeweils aus den Kondensatströmen zu einem oder mehreren Zeitpunkten berechnet wird. In einer alternativen, bevorzugten Ausgestaltung des Verfahrens wird eine Änderung einer angefallenen Kondensatmasse $m_K$ für ein vorgegebenes Zeitintervall durch numerische Integration des Kondensatstroms $\Delta\dot{m}_w(t)$ über der Zeit berechnet.

In einer konkret möglichen Ausgestaltung der Erfindung wird die zu einem Zeitpunkt t insgesamt angefallene Kondensatmasse $m_K(t)$ mit einem Grenzwert $m_{K,max1}$ verglichen, so dass bei Überschreitung des Wertes $m_{K,max1}$ in die Steuerung des Schraubenkompressors eingegriffen werden kann. Konkret kann beispielsweise im Ölkreislauf ein höherer Teilstrom am Ölkühler vorbeigeführt werden, so dass sich das Öl insgesamt erwärmt. Auch könnte die zusätzliche Kühlleistung, die durch einen Ventilator hervorgerufen wird, durch Ausschalten oder Herunterfahren des Ventilators ausgeschaltet oder begrenzt werden. In einer ganz konkreten Ausführungsform kann in einem derartigen Fall die Soll-Wertvorgabe für die Verdichtungsendtemperatur erhöht werden oder eine Verlängerung des Lastlaufintervalls des Schraubenkompressors vorgesehen werden, sofern dies betriebstechnisch möglich ist. Hinsichtlich einer Solltemperatur der Verdichtungsendtemperatur (VET) kann auch eine Erhöhung um ein vorbestimmtes Maß vorgesehen sein, beispielsweise um einen vorbestimmten Temperaturwert, insbesondere um 5°K, so dass dann gilt $VET_{Soll,neu} = VET_{Soll,alt}$

+ 5 K.

In einer weiter bevorzugten Ausgestaltung wird die zu einem Zeitpunkt t insgesamt angefallene Kondensatmasse $m_K(t)$ mit einem Grenzwert $m_{K,max2}$ verglichen und bei Überschreitung des Wertes $m_{K,max2}$ eine Warn- bzw. Fehlermeldung ausgegeben.

In einer konkret bevorzugten Ausgestaltung wird Wassereintrittsmassenstrom $\dot{m}_{ein}(t)$ aus dem Eintritts-Luftmassenstrom $\dot{m}_{Luft}(t)$ mit der Annahme einer relativen Feuchte von 100% errechnet. Durch diese Annahme wird das erfindungsgemäße Verfahren besonders einfach durchführbar und der so definierte virtuelle Sensor ist vergleichsweise einfach konzipiert.

Es ist aber auch möglich, den Wassereintrittsmassenstrom $\dot{m}_{ein}(t)$ aus dem Eintritts-Luftmassenstrom $\dot{m}_{Luft}(t)$ mit der Annahme einer relativen Feuchte mit einem festgelegten Wert F, mit $70\% \leq F < 100\%$, also beispielsweise einem festgelegten Wert von 90%, 80% oder 70% zu errechnen oder einer von der Ansaugtemperatur $T_{Ans}$ abhängigen relativen Feuchte zu errechnen.

Schließlich wäre es auch möglich, den Wassereintrittsmassenstrom $\dot{m}_{ein}(t)$ aus dem Eintritts-Luftmassenstrom unter Zugrundelegung eines bestimmten Wertes einer relativen Feuchte < 100% zu bestimmen, wobei der Wert der relativen Feuchte beispielsweise über einen Hardwaresensor erfasst, abgeschätzt oder anderweitig der Bestimmung des Wassereintrittsmassenstroms zugrunde gelegt werden könnte. Beispielsweise können auch Daten einer externen Wetterstation Berücksichtigung finden.

In einer besonders bevorzugten Ausgestaltung gehen zur Bestimmung des Eintritts-Luftmassenstroms mindestens die folgenden Parameter ein:

- eine anlagenspezifische Förderkennzahl, die insbesondere bei FU-geregelten Schraubenkompressoren von der aktuellen Drehzahl n abhängt, und vorzugsweise weiterhin auch
- der Druck $p_{akt}$ im Ölabscheidebehälter (11),
- der Umgebungsdruck $p_{amb}$, und
- die Ansaugtemperatur $T_{Ans}$.

In einer besonders bevorzugten Ausgestaltung gehen zur Bestimmung des Wassereintrittsmassenstroms $\dot{m}_{ein}(t)$ mindestens die folgenden Parameter ein:

- der Eintritts-Luftmassenstrom $\dot{m}_{Luft}(t)$
- die Ansaugtemperatur $T_{Ans}$, und vorzugsweise auch
- der Umgebungsdruck $P_{amb}$ sowie
- ein Wert für die relative Feuchte, insbesondere ein relativer Feuchtewert von 100%.

In einer besonders bevorzugten Ausgestaltung gehen zur Bestimmung des Wasseraustrittsmassenstroms $\dot{m}_{aus}(t)$ mindestens die folgenden Parameter ein:

- der Eintritts-Luftmassenstrom $\dot{m}_{Luft}(t)$,
- der Druck $p_{akt}$ im Ölabscheidebehälter (11),
- die Temperatur $T_2$ nach dem Ölabscheidebehälter (11), und vorzugsweise auch
- ein Wert für die relative Feuchte, beispielsweise ein Wert von 100%.

Ganz generell lässt sich ein Wasserdampfmassenstrom $\dot{m}_W$ in Abhängigkeit von Temperatur T, Druck p, Massenstrom der Luft $\dot{m}_{Luft}$ und relativer Feuchte der Luft $\varphi$ folgendermaßen berechnen:

$$\dot{m}_W(T, p, \dot{m}_{Luft}, \varphi) = \dot{m}_{Luft} \frac{\varphi p_{sat,w}(T)}{p} \frac{R_a}{R_w}$$

Dabei sind $R_a$ die Gaskonstante von Luft, $R_W$ die Gaskonstante von Wasserdampf und $p_{sat,W}(T)$ der Dampfdruck von Wasser bei der Temperatur T. Der Dampfdruck kann aus Wasserdampftafeln entnommen werden oder über eine Näherungsfunktion berechnet werden z. B. mit der Antoine-Gleichung:

$$p_{sat,w}(T) = \exp\left(A - \frac{B}{T + C}\right), \text{mit konstanten } A, B, C$$

Die eingangs genannte Aufgabe wird außerdem insbesondere gelöst durch einen öleingespritzten Schraubenkompressor umfassend eine, insbesondere zentrale, Steuerung, die dazu eingerichtet ist, den in den Kompressor angesaugten Eintritts-Luftmassenstrom $\dot{m}_{Luft}$ (t) zu bestimmen und das erfindungsgemäße Verfahren durchzuführen.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen:

Figur 1    ein Blockschaltbild eines öleingespritzten Schraubenkompressors mit Ölabscheidebehälter nach dem Stand der Technik,

Figur 2    ein Ablaufschema zur Darstellung einer bevorzugten Ausführungsform der vorliegenden Erfindung,

Figur 3    ein Blockschaltbild eines erfindungsgemäßen öleingespritzten Schraubenkompressors mit Ölabscheidebehälter.

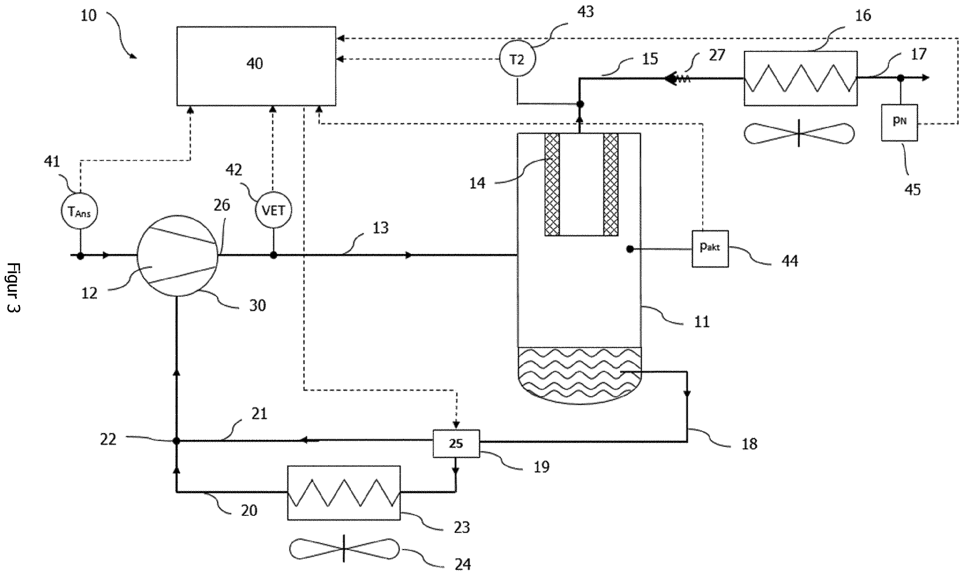

In Figur 3 ist ein Blockschaltbild eines Schraubenkompressors 10, der einen Kompressorblock 30 und einen Ölabscheider 11 umfasst, dargestellt. Der Schraubenkompressor 10 weist im Kompressorblock 30 auch einen Verdichtungsraum 12 auf. Verdichtete Luft gelangt über eine erste Druckluftleitung 13 an den Ölabscheider 11. Im Ölabscheidebehälter 11 ist ein Ölfilter 14 vorgesehen. Die über die erste Druckluftleitung 13 in den Ölabscheidebehälter 11 geführte Druckluft tritt durch das Ölfilter 14 hindurch und wird über eine zweite Druckluftleitung 15 zu einem Nachkühler 16 geführt und von dort über eine dritte Druckluftleitung 17 einer Nutzanwendung, beispielsweise einem über einen Drucklufttank gepufferten Leitungsnetz in einem industriellen Betrieb, zugeführt.

Das im Ölabscheidebehälter 11 abgeschiedene Öl wird über eine Rückführleitung 18 an den Schraubenkompressor 10 zurückgeführt und dort zur Kühlung, Abdichtung und Schmierung in den Verdichtungsraum 12 eingespritzt. Die Rückführleitung ist an einem Verzweigungspunkt 19 in eine erste Teilleitung 20 sowie eine zweite Teilleitung 21 aufgeteilt. Die erste Teilleitung 20 und zweite Teilleitung 21 werden in einem Vereinigungspunkt 22 wieder zusammengeführt.

In der ersten Teilleitung 20 ist ein Ölkühler 23 vorgesehen, der dem rückgeführten Öl Wärme entzieht und zu diesem Zweck zur besseren Wärmeabfuhr mit einem von einem Ventilator 24 erzeugten Luftstrom gekühlt wird. Die zweite Teilleitung 21 bildet einen Bypass, über den Öl am Ölkühler 23 vorbeigeführt werden kann. Mit einem elektrisch ansteuerbaren, stufenlos einstellbaren Regelventil 25 kann das Verhältnis zwischen über den Ölkühler 23 geführtem Öl und am Ölkühler 23 vorbeigeführtem Öl stufenlos eingestellt werden. Dadurch lässt sich die Temperatur des in den Verdichtungsraum 12 eingespritzten Öls auf einen jeweils gewünschten Wert einstellen.

Im normalen Betrieb wird die Öltemperatur des wieder in den Verdichtungsraum 12 eingespritzten Öls auf einen solchen Temperaturwert eingestellt, dass die Verdichtungsendtemperatur (VET) an einem Auslass 26 des Schraubenkompressors 10 auf einem solchen Temperaturniveau liegt, dass ein Kondensatanfall im Ölabscheidebehälter 11 vermieden wird. Gleichzeitig wird eine Mindestverdichtungsendtemperatur von z.B. 60°C angestrebt. Auch darf eine maximale Verdichtungsendtemperatur, schon von den gesetzlichen Vorgaben her, nicht überschritten werden. Insofern wird bei den meisten Schraubenkompressoren eine Verdichtungsendtemperatur von nicht höher als 95°C angestrebt. Im normalen Betrieb soll die Verdichtungsendtemperatur einerseits in den vorgenannten Bereichen möglichst niedrig eingestellt werden, um eine unnötige Belastung des Öls zu vermeiden; auf der anderen Seite soll, wie bereits erwähnt, Kondensatbildung mit Sicherheit verhindert werden.

Der Schraubenkompressor 10 weist weiterhin eine zentrale Steuerung 40 auf bzw. wirkt mit einer solchen zentralen Steuerung 40 zusammen. Die zentrale Steuerung 40 kann in einer bevorzugten Ausgestaltung Daten von verschiedenen Sensoren übermittelt bekommen, nämlich von einem ersten Temperatursensor der zur Erfassung der Ansaugtemperatur $T_{Ans}$ ausgebildet und angeordnet ist, einem zweiten Temperatursensor 42 der zur Erfassung der Verdichtungsendtemperatur an einem Ausgang des Kompressorblocks 30 angeordnet ist und einem dritten Temperatursensor 43 der zur Erfassung der Temperatur $T_2$ nach dem Ölabscheider 11 angeordnet und ausgebildet ist. Die zentrale Steuerung 40 bekommt weiterhin noch Daten von zwei Drucksensoren übermittelt, nämlich eines ersten Drucksensors 44 der zur Erfassung eines Drucks $P_{akt}$ im Ölabscheidebehälter 11 angeordnet und vorgesehen ist und eines zweiten Drucksensors 45 der zur Erfassung eines Netzdrucks $P_N$ nach dem Nachkühler vorgesehen ist. Es kann noch ein weiterer, dritter Drucksensor (nicht gezeigt) an der zentralen Steuerung angeordnet sein, zur Erfassung und Übermittlung eines Umgebungsdrucks $P_{amb}$. Der Umgebungsdruck kann allerdings auch als angenommener Wert berücksichtigt werden bzw. von extern beispielsweise über ein Datennetz, beispielsweise von einer Wetterstation, bezogen werden. Weiterhin kann statt der Temperatur $T_{Ans}$, die beispielsweise über den Temperatursensor 42 erfasst wird ein fester angenommener Temperaturwert herangezogen werden. Als solcher fester Temperaturwert kann ggf. auch je nach Aufstellungsort, beispielsweise eine Temperatur von 25°C oder von 30°C angesetzt werden. Anstelle eines Drucks $P_{Akt}$ im Ölabscheidebehälter 11 kann auch aus dem vom Drucksensor 45 gelieferten Daten, also aus dem Netzdruck $P_N$ auf dem Druck im Ölabscheidebehälter $P_{Akt}$ rückgerechnet werden bzw. aus dem Netzdruck $P_N$ der Druck im Ölabscheidebehälter $P_{Akt}$ abgeschätzt werden. Weiterhin kann auch ein fester Wert für den Druck im Ölabscheidebehälter $P_{Akt}$ angenommen werden, beispielsweise der Maximalwert, der für den Schraubenkompressor wirkseitig voreingestellt ist oder ein Maximalwert, der von einem Bediener an der Steuerung des Schraubenkompressors voreingestellt wird.

Gemäß der vorliegenden Erfindung wird ein Verfahren bzw. ein virtueller Sensor vorgeschlagen, um das korrekte Funktionieren der vorbeschriebenen Regelung zu überwachen bzw. feststellen zu können, wenn unbeabsichtigter Weise Kondensatanfall möglich erscheint. Hierzu werden Wassermassenströme zu jeweils vorgegebenen Abtastzeitpunkten miteinander verglichen und daraus ein momentan anfallender Kondensatstrom bestimmt. Aus einer Addition des Wertes des momentan anfallenden Kondensatstroms, der unterschiedliche Vorzeichen annehmen kann und der aus vorherigen Berechnungen bereits vorhandenen Kondensatmasse wird eine jeweils aktuell vorhandene Kondensatmasse errechnet.

Da bei der Bestimmung des Wassereintrittsmassenstroms von einem Worst Case-Szenario ausgegangen werden kann, nämlich beispielsweise dass die Umgebungsluft eine 100%-ige relative Luftfeuchte aufweist, sind die bestimmten Werte, wie anfallender Kondensatstrom oder Kondensatmasse, stets als "momentan möglich anfallender Kondensatstrom bzw. momentan mögliche Kondensatmasse", also ebenfalls als Worst Case-Szenario, zu verstehen. Beim Wasseraustrittsmassenstrom wird hingegen davon ausgegangen, dass ohnehin 100%-ige Sättigung vorliegt, wenn Kondensat auszutragen ist, so dass hier der maximal mögliche Wasseraustrittsmassenstrom mit dem tatsächlich ausgetragenen Wasseraustrittsmassenstrom zumindest näherungsweise übereinstimmen sollte.

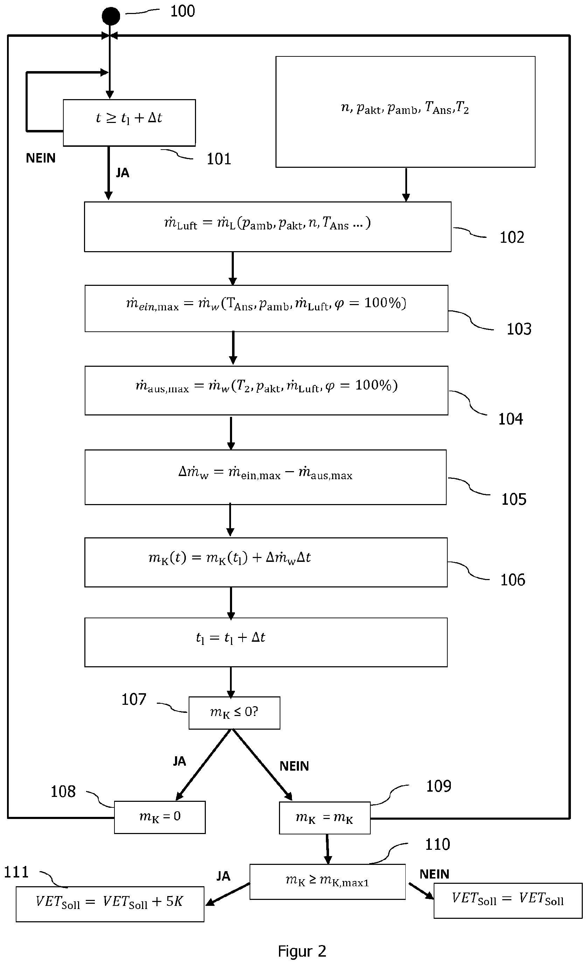

Anhand des Ablaufschemas nach Figur 2 wird nachstehend die bevorzugte Ausführungsform des erfindungsgemäßen Verfahrens nochmals detailliert erläutert. Im Schritt 100 wird das Verfahren gestartet und im Schritt 101 überprüft, ob sich der Schraubenkompressor im Lastlauf befindet und bereits eine Sekunde vorbei ist. Ist das Ergebnis dieser Prüfung negativ, muss dieser Prüfungsschritt erneut durchlaufen werden. Ist das Ergebnis positiv, wird ein möglicher Luftmassenstrom bzw. Eintritts-Luftmassenstrom in einem Schritt 102 wie folgt errechnet:

$$\dot{m}_{Luft}(t) = \dot{m}_L\,(p_{amb}, p_{akt}, n, T_{Ans} \ldots) \qquad (1)$$

In die Berechnung des möglichen Luftmassenstroms gehen eine anlagenspezifische Förderkennzahl, die bei FU-geregelten Schraubenkompressoren von der aktuellen Drehzahl n abhängt, der Druck $p_{akt}$ im Ölabscheidebehälter 11, der Umgebungsdruck $p_{amb}$, und die Ansaugtemperatur $T_{Ans}$ nach dem Ölabscheidebehälter 11 ein.

In einem Schritt 103 wird aus dem möglichen Luftmassenstrom ein Wassereintrittsmassenstrom nach folgender Formel (2) berechnet:

$$\dot{m}_{ein}\,(t) = \dot{m}_w(T_{Ans}, p_{amb}, \dot{m}_{Luft}, \varphi = 100\%) \qquad (2)$$

Bei dieser Berechnung bzw. Bestimmung wird von einem Worst Case-Szenario ausgegangen, es wird also angenommen, dass die angesaugte Umgebungsluft eine relative Feuchte von 100% aufweist.

In einem Schritt 104 wird der momentan Wasseraustrittsmassenstrom mit folgender Formel (3)

$$\dot{m}_{aus}\,(t) = \dot{m}_w(T_2, p_{akt}, \dot{m}_{Luft}, \varphi = 100\%) \qquad (3)$$

berechnet, wobei in diese Berechnung die Temperatur $T_2$ nach dem Ölabscheidebehälter 11, der Druck im Ölabscheidebehälter $p_{Akt}$, der Luftmassenstrom $\dot{m}_{Luft}$ sowie eine relative Luftfeuchte von 100% eingehen. Es dürfte für den Fachmann klar sein, dass die Schritte 103 und 104 auch in umgekehrter Reihenfolge bzw. gleichzeitig stattfinden können.

Aus dem im Schritt 103 bestimmten Wassereintrittsmassenstrom und dem aus Schritt 104 bestimmten Wasseraustrittsmassenstrom wird in Schritt 105 nach Gleichung (4) eine momentane Wassermassenänderungsrate, also eine momentan anfallende Kondensatmasse, wie folgt berechnet:

$$\Delta\dot{m}_w(t) = \dot{m}_{ein}(t) - \dot{m}_{aus}(t) \qquad (4).$$

Ist die momentan anfallende Wassermassenänderungsrate bzw. die momentan anfallende Kondensatmasse positiv, so fällt tatsächlich Kondensat an und eine bereits vorhandene Kondensatmasse wird erhöht. Ist der Wert der momentan anfallenden Wassermassenänderungsrate bzw. der momentan anfallenden Kondensatmasse hingegen negativ, wird Kondensat ausgetragen, d.h. eine momentan vorhandene Kondensatmasse verringert sich.

Eine Berechnung der momentan vorhandenen Kondensatmasse $m_K$ erfolgt nach Gleichung (5) im Schritt 106, so dass unter Berücksichtigung der im Schritt 105 errechneten momentanen Wassermassenänderungsrate die aktuell gegebene Kondensatmasse fortgeschrieben wird.

Das Verfahren könnte rein theoretisch an dieser Stelle wieder von vorne beginnen, sofern lediglich im Sinne eines virtuellen Sensors die Bestimmung der momentan gegebenen Kondensatmasse $m_K$ erfolgen soll.

Es können aber auch weitere Maßnahmen in Betracht gezogen werden. Hierfür wird in einem Schritt 107 überprüft, ob die momentan gegebene Kondensatmasse $m_K \leq 0$ ist. In diesem Fall wird die momentan gegebene Kondensatmasse in einem Schritt 108 auf null gesetzt und das Verfahren von vorne begonnen. Ist die momentan gegebene Kondensatmasse $m_K$ hingegen positiv, wird in einem Schritt 109 das Verfahren einerseits mit der aktuell gegebenen Kondensatmasse $m_K$ erneut von vorne begonnen und andererseits in einem Schritt 110 wird überprüft, ob die momentan gegebene Kondensatmasse $m_K$ über einem Grenzwert $m_{K,max1}$, also über einer bestimmten Menge Kondensat liegt. Ist dies der Fall, wird in einem weiteren Schritt 111 der Sollwert der Verdichtungsendtemperatur um 5K erhöht, bis die momentan gegebene Kondensatmasse erneut den Wert 0 erreicht hat. Dabei wird allerdings auch berücksichtigt, dass die Verdichtungsendtemperatur einen Maximalwert von 95°C nicht überschreitet. Wird im Schritt 110 hingegen festgestellt, dass die aktuell vorhandene Kondensatmasse den vorgegebenen Grenzwert von $m_{K,max1}$ nicht überschritten hat, wird der Sollwert der Verdichtungsendtemperatur nicht beeinflusst.

Obwohl vorstehend ein Massenstrom bzw. eine Massenänderungsrate als eine für den Wasserfluss bzw. den Kondensatanfall charakterisierende Größe dargestellt wurde, kann stattdessen auch ein Volumenstrom bei einem geeigneten Referenzzustand oder auch ein Stoffmengenstrom herangezogen werden. Alternativ wäre es auch möglich, eine die Kondensatmassenänderung charakterisierende Größe näherungsweise durch das Produkt aus einer den Luftmassenstrom charakterisierende Größe (z.B. Masse, Volumen, Menge) und der Differenz der Wasserdampfdrücke von Eintritt und Austritt jeweils umgerechnet auf einen gemeinsamen Referenzdruck zu berechnen.

Bezuaszeichenliste

| | |
|---|---|
| VET | Verdichtungsendtemperatur |
| $\dot{m}_{Luft}$ | Eintritts-Luftmassenstrom |
| $\dot{m}_{ein,max}$ | maximal möglicher Wassereintrittsmassenstrom |
| $\dot{m}_{aus,max}$ | maximal möglicher Wasseraustrittsmassenstrom |
| $\Delta\dot{m}_w$ | momentan anfallender Kondensatstrom |
| $m_K(t)$ | Kondensatmasse |
| 1' | Ansaugstelle |
| 10 | Schraubenkompressor |
| 11, 11' | Ölabscheidebehälter |
| 12 | Verdichtungsraum |
| 13 | erste Druckluftleitung |
| 14, 14' | Ölfilter |
| 15 | zweite Druckluftleitung |
| 16, 16' | Nachkühler |
| 17 | dritte Druckluftleitung |
| 18 | Rückführleitung |
| 19 | Verzweigungspunkt |
| 20 | erste Teilleitung |
| 21 | zweite Teilleitung |
| 22 | Vereinigungspunkt |
| 23, 23' | Ölkühler |
| 24 | Ventilation |
| 25, 25' | Regelventil |
| 26 | Auslass (Schraubenkompressor) |
| 27, 27' | Rückschlagventil |
| 30, 30' | Kompressorblock |
| 40, 40' | Zentrale Steuerung |
| 41, 41' | erster Temperatursensor ($T_{Ans}$) |
| 42, 42' | zweiter Temperatursensor (VET) |
| 43, 43' | dritter Temperatursensor ($T_2$) |
| 44, 44' | erster Drucksensor ($P_{akt}$) |
| 45, 45' | zweiter Drucksensor ($P_N$) |

**Patentansprüche**

1. Verfahren zum Überwachen eines öleingespritzten, zur Verdichtung von angesaugter Luft ausgebildeten Schraubenkompressors, bei dem Öl aus einem Ölabscheidebehälter (11) in einen Verdichtungsraum (12) eines Kompressorblocks (30) zurückgeführt wird, auf Kondensatbildung im Ölkreislauf aufgrund einer zu niedrigen Verdichtungsendtemperatur (VET), **dadurch gekennzeichnet, dass** für einen Zeitpunkt t ein Wassereintrittsmassenstrom $\dot{m}_{ein}$ (t) und ein Wasseraustrittsmassenstrom $\dot{m}_{aus}$ (t) bestimmt wird,

wobei der Wassereintrittsmassenstrom $\dot{m}_{ein}$ (t) aus dem Eintritts-Luftmassenstrom $\dot{m}_{Luft}$ (t)

- mit der Annahme einer relativen Feuchte von 100% oder
- mit der Annahme einer relativen Feuchte mit einem festgelegten Wert F, mit 70% $\leq$ F < 100%, oder
- mit der Annahme einer von der Ansaugtemperatur $T_{Ans}$ abhängigen relativen Feuchte errechnet wird, oder

wobei der Wassereintrittsmassenstrom $\dot{m}_{ein}$(t) aus dem Eintritts-Luftmassenstrom $\dot{m}_{Luft}$ (t) unter Zugrundelegung eines bestimmten Wertes einer relativen Feuchte < 100% bestimmt wird, wobei der Wert der relativen Feuchte über einen Hardwaresensor erfasst wird,
und anhand einer Differenzbildung anfallender Kondensatstrom $\Delta\dot{m}_w$ (t) = $\dot{m}_{ein}$ (t) - $\dot{m}_{aus}$ (t) bestimmt wird und wobei es sich beim anfallenden Kondensatstrom $\Delta\dot{m}_w$ um die Änderung der im Ölkreislauf enthaltenen Kondensatmasse pro Zeit für einen Zeitpunkt t handelt.

2. Verfahren nach Anspruch 1, **dadurch gekennzeichnet, dass** aus einer Aufsummierung der in einem Zeitintervall anfallenden Kondensatströme eine insgesamt in diesem Zeitintervall angefallene Kondensatmasse $m_K$ errechnet wird, wobei die Berechnung vorzugsweise wie folgt erfolgt: $m_K(t)=m_K(t- dt)+\Delta\dot{m}_w*dt$ (beispielsweise mit dt = 1s).

3. Verfahren nach Anspruch 1, **dadurch gekennzeichnet, dass** ausgehend von einem bekannten Anfangswert der Kondensatmasse $m_K(t_0)$ durch numerische Integration des Kondensatstroms $\Delta\dot{m}_w$ über der Zeit die insgesamt angefallene Kondensatmasse $m_K(t)$ berechnet wird.

4. Verfahren nach Anspruch 2 oder 3, **dadurch gekennzeichnet, dass** die zu einem Zeitpunkt t insgesamt angefallene Kondensatmasse $m_K$ (t) mit einem Grenzwert $m_{K,max1}$ verglichen wird und bei Überschreitung des Wertes $m_{K,max1}$

$$m_K\ (t) > m_{K,max1}$$

in die Steuerung des Schraubenkompressors eingegriffen wird.

5. Verfahren nach Anspruch 4, **dadurch gekennzeichnet, dass** bei $m_K$ (t) > $m_{K,max1}$ ein Sollwert für die Verdichtungsendtemperatur (VET) in einem vorbestimmten Maß erhöht wird, insbesondere um einen vorbestimmten Temperaturwert erhöht wird, z.B. $VET_{Soll,neu}$ = $VET_{Soll,alt}$ + 5 K.

6. Verfahren nach einem der Ansprüche 2 bis 5, **dadurch gekennzeichnet, dass** die zu einem Zeitpunkt (t) insgesamt angefallene Kondensatmasse $m_K$ (t) mit einem Grenzwert $m_{K,max2}$ verglichen wird und dass bei Überschreitung des Wertes $m_{K,max2}$

$$m_K\ (t) > m_{K,max2}$$

eine Fehlermeldung ausgegeben wird.

7. Verfahren nach Anspruch 1, **dadurch gekennzeichnet, dass** zur Bestimmung des Eintritts-Luftmassenstroms $\dot{m}_{Luft}$ (t)

• eine anlagenspezifische Förderkennzahl, die insbesondere bei FU-geregelten Schraubenkompressoren von der aktuellen Drehzahl n abhängt, und weiter vorzugsweise auch
• der Druck $p_{akt}$ im Ölabscheidebehälter (11),
• der Umgebungsdruck $p_{amb}$, und
• die Ansaugtemperatur $T_{Ans}$ eingehen.

8. Verfahren nach Anspruch 7, **dadurch gekennzeichnet, dass** zur Bestimmung des Wassereintrittsmassenstroms $\dot{m}_{ein}(t)$

- der Eintritts-Luftmassenstrom $\dot{m}_{Luft}(t)$
- die Ansaugtemperatur $T_{Ans}$, und auch
- der Umgebungsdruck $P_{amb}$ sowie
- ein Wert für die relative Feuchte, insbesondere ein relativer Feuchtewert von 100%,

eingehen.

9. Verfahren nach Anspruch 7 oder 8, **dadurch gekennzeichnet, dass** zur Bestimmung des Wasseraustrittsmassenstroms $\dot{m}_{aus}(t)$

- der Eintritts-Luftmassenstrom $\dot{m}_{Luft}(t)$,
- der Druck $p_{akt}$ im Ölabscheidebehälter (11),
- die Temperatur $T_2$ nach dem Ölabscheidebehälter (11), und vorzugsweise auch
- ein Wert für eine relative Feuchte, beispielsweise ein Wert von 100%,

eingehen.

10. Öleingespritzter Schraubenkompressor (10) umfassend eine, insbesondere zentrale, Steuerung (40), die dazu eingerichtet ist, den in den Kompressor angesaugten Eintritts-Luftmassenstrom $\dot{m}_{Luft}(t)$ zu bestimmen und das Verfahren nach einem der Ansprüche 1 bis 9 durchzuführen.

## Claims

1. Method for monitoring an oil-injected screw compressor designed for compressing intake air, in which oil is returned from an oil separator container (11) into a compression chamber (12) of a compressor block (30), for condensate formation in the oil circuit due to an excessively low compression end temperature (VET),

    **characterized in that** a water inlet mass flow $\dot{m}_{in}(t)$ and a water outlet mass flow $\dot{m}_{out}(t)$ are determined for a point in time t,
    wherein the water inlet mass flow $\dot{m}_{in}(t)$ is calculated from the inlet air mass flow $\dot{m}_{air}(t)$

    - with the assumption of a relative humidity of 100% or
    - with the assumption of a relative humidity with a fixed value H, with 70%≤H<100%, or
    - with the assumption of a relative humidity dependent on the intake air temperature $T_{int}$,
    or

    wherein the water inlet mass flow $\dot{m}_{in}(t)$ is determined from the inlet air mass flow $\dot{m}_{air}(t)$ on the basis of a specified value of a relative humidity <100%, wherein the value of the relative humidity is detected via a hardware sensor,
    and occurring condensate flow $\Delta\dot{m}_w(t)= \dot{m}_{in}(t)- \dot{m}_{out}(t)$ is determined on the basis of a difference formation, and wherein the occurring condensate flow $\Delta\dot{m}_w$ is the change in the condensate mass contained in the oil circuit per time for a point in time t.

2. Method according to claim 1, **characterized in that** from a summation of the condensate flows occurring in a time interval a total condensate mass $m_c$ occurring in this time interval is calculated, wherein the calculation is preferably carried out as follows: $m_c(t)= m_c(t-dt)+\Delta \dot{m}_w*dt$ (for example with dt=1s).

3. Method according to claim 1, **characterized in that**, starting from a known initial value of the condensate mass $m_c(t_0)$ by numerical integration of the condensate flow $\Delta\dot{m}_w$ over time, the total accumulated condensate mass $m_c(t)$ is calculated.

4. Method according to claim 2 or 3, **characterized in that** the total condensate mass $m_c(t)$ occurring at a point in time t is compared with a limit value $m_{c,max1}$ and upon exceeding the value $m_{c,max1}$

$$m_c(t) > m_{c,max1}$$

an intervention is carried out in the control of the screw compressor.

5. Method according to claim 4, **characterized in that** in the event of $m_c(t) > m_{c,max1}$, a setpoint value for the compression end temperature (VET) is increased to a predetermined extent, in particular increased by a predetermined temperature value, e.g. $VET_{set,new} = VET_{set,old} + 5$ K.

6. Method according to one of claims 2 to 5, **characterized in that** the total condensate mass $m_c(t)$ occurring at a point in time (t) is compared with a limit value $m_{c,max2}$ and **in that** upon exceeding the value $m_{c,max2}$

$$m_c(t) > m_{c,max2}$$

an error message is output.

7. Method according to claim 1, **characterized in that** for determining the inlet air mass flow $\dot{m}_{air}(t)$

  • a system-specific delivery index, which depends on the current speed n, in particular in the case of frequency-converter-controlled screw compressors, and further preferably also
  • the pressure $p_{act}$ in the oil separator container (11),
  • the ambient pressure $p_{amb}$, and
  • the intake air temperature $T_{int}$ are included.

8. Method according to claim 7, **characterized in that** for determining the water inlet mass flow $\dot{m}_{in}(t)$

  • the inlet air mass flow $\dot{m}_{air}(t)$
  • the intake temperature $T_{int}$, and also
  • the ambient pressure $P_{amb}$, as well as
  • a value for the relative humidity, in particular a relative humidity value of 100%, are included.

9. Method according to claim 7 or 8, **characterized in that** for determining the water outlet mass flow $\dot{m}_{out}(t)$

  • the inlet air mass flow $\dot{m}_{air}(t)$,
  • the pressure $p_{act}$ in the oil separator container (11),
  • the temperature $T_2$ downstream of the oil separator container (11), and preferably also
  • a value for a relative humidity, for example a value of 100%, are included.

10. Oil-injected screw compressor (10) comprising a controller (40), in particular a central controller, which is adapted to determine the inlet air mass flow $\dot{m}_{air}(t)$ sucked into the compressor and to carry out the method according to one of claims 1 to 9.

**Revendications**

1. Procédé pour la surveillance de la formation de condensation dans le circuit d'huile résultant d'une température finale de compression (TFC) trop basse d'un compresseur à vis à injection d'huile conçu pour comprimer de l'air aspiré, dans lequel de l'huile est ramenée d'un réservoir de déshuileur (11) à une chambre de compression (12) d'un bloc de compresseur (30), **caractérisé en ce qu'**un débit massique d'entrée d'eau $\dot{m}_{in}(t)$ et un débit massique de sortie d'eau $\dot{m}_{out}(t)$ sont déterminés pour un instant t, le débit massique d'entrée d'eau $\dot{m}_{in}(t)$ étant calculé à partir du débit massique d'entrée d'air $\dot{m}_{air}(t)$

  - en supposant une densité relative de 100 % ou
  - en supposant une humidité relative d'une valeur fixée H, où 70 % H ≤ 100 %, ou
  - en supposant une humidité relative dépendante de la température d'aspiration $T_{asp}$,
  ou
  le débit massique d'entrée d'eau $\dot{m}_{in}(t)$ étant calculé à partir du débit massique d'entrée d'air $\dot{m}_{air}(t)$ sur la base d'une valeur déterminée d'humidité relative < 100 %, la valeur de l'humidité relative étant détectée par un capteur matériel,

et un débit de condensat produit $\Delta\dot{m}_{eau}$ (t) = $\dot{m}_{in}$ (t) - $\dot{m}_{out}$ (t) est déterminé à l'aide d'un calcul de différence et le débit de condensat produit $\Delta\dot{m}_{eau}$ représentant le changement de la masse de condensat contenue dans le circuit d'huile par unité de temps à un instant t.

2. Procédé selon la revendication 1, **caractérisé en ce que**, à partir d'une somme des débits de condensat produits pendant un intervalle de temps, une masse de condensat totale $m_C$ produite au cours de cet intervalle de temps est calculée, de préférence de la manière suivante : $m_C(t) = m_C(t - dt) + \Delta\dot{m}_{eau} * dt$ (par exemple avec dt = 1 s).

3. Procédé selon la revendication 1, **caractérisé en ce que**, à partir d'une valeur initiale connue de la masse de condensat $m_C(t_0)$, la masse de condensat totale produite $m_C(t)$ est calculée par intégration numérique du débit de condensat $\Delta m_{eau}$ dans le temps.

4. Procédé selon la revendication 2 ou 3, **caractérisé en ce que** la masse de condensat totale produite à un instant t $m_C$ (t) est comparée à une valeur limite $m_{C,max1}$ et une intervention dans la commande du compresseur à vis se produit si la valeur $m_{C,max1}$ est dépassée

$$m_C (t) > m_{C,max1}.$$

5. Procédé selon la revendication 4, **caractérisé en ce que** si $m_C$ (t) > $m_{C,max1}$, une valeur de consigne de la température finale de compression (TFC) est augmentée dans une mesure prédéterminée, en particulier d'une valeur de température prédéterminée, par exemple à $TFC_{cons,nouv} = TFC_{cons,anc} + 5$ K.

6. Procédé selon l'une des revendications 2 à 5, **caractérisé en ce que** la masse de condensat totale produite à un instant t $m_C$ (t) est comparée à une valeur limite $m_{C,max2}$ et un message d'erreur est émis si la valeur $m_{C,max2}$ est dépassée

$$m_C (t) > m_{C,max2}.$$

7. Procédé selon la revendication 1, **caractérisé en ce que** la détermination du débit massique d'entrée d'air $\dot{m}_{air}$ (t) utilise

   • une grandeur caractéristique de refoulement spécifique de l'installation, qui dépend en particulier de la vitesse de rotation actuelle n dans les compresseurs à vis régulés par CF, et de plus préférence aussi
   • la pression $p_{act}$ dans le réservoir déshuileur (11),
   • la pression ambiante $p_{amb}$ et
   • la température d'aspiration $T_{asp}$.

8. Procédé selon la revendication 7, **caractérisé en ce que** la détermination du débit massique d'entrée d'eau $\dot{m}_{in}$ (t) utilise

   • le débit massique d'entrée d'air $\dot{m}_{air}$ (t)
   • la température d'aspiration $T_{asp}$ et aussi
   • la pression ambiante $p_{amb}$,
   • ainsi qu'une valeur d'humidité relative, en particulier une valeur d'humidité relative de 100 %.

9. Procédé selon la revendication 7 ou 8, **caractérisé en ce que** la détermination du débit massique de sortie d'eau $\dot{m}_{out}$ (t) utilise

   • le débit massique d'entrée d'air $\dot{m}_{air}$ (t),
   • la pression $p_{akt}$ dans le réservoir déshuileur (11),
   • la température $T_2$ en aval du réservoir déshuileur (11) et aussi, de préférence,
   • une valeur d'humidié relative, par exemple une valeur de 100 %.

10. Compresseur à vis à injection d'huile (10) comprenant une commande (40), en particulier centrale, qui est configurée pour déterminer le débit massique d'entrée d'air $\dot{m}_{air}$ (t) aspiré dans le compresseur et exécuter le procédé selon l'une des revendications 1 à 9.

Figur 1 (Stand der Technik)

● — 100

$t \geq t_\text{l} + \Delta t$

101

NEIN

JA

$n, p_\text{akt}, p_\text{amb}, T_\text{Ans}, T_2$

$\dot{m}_\text{Luft} = \dot{m}_\text{L}(p_\text{amb}, p_\text{akt}, n, T_\text{Ans} \dots)$

102

$\dot{m}_{ein,\text{max}} = \dot{m}_w(T_\text{Ans}, p_\text{amb}, \dot{m}_\text{Luft}, \varphi = 100\%)$

103

$\dot{m}_\text{aus,max} = \dot{m}_w(T_2, p_\text{akt}, \dot{m}_\text{Luft}, \varphi = 100\%)$

104

$\Delta\dot{m}_\text{w} = \dot{m}_\text{ein,max} - \dot{m}_\text{aus,max}$

105

$m_\text{K}(t) = m_\text{K}(t_\text{l}) + \Delta\dot{m}_\text{w}\Delta t$

106

$t_\text{l} = t_\text{l} + \Delta t$

107

$m_\text{K} \leq 0?$

JA

NEIN

108

$m_\text{K} = 0$

109

$m_\text{K} = m_\text{K}$

110

111

JA

$m_\text{K} \geq m_\text{K,max1}$

NEIN

$VET_\text{Soll} = VET_\text{Soll} + 5K$

$VET_\text{Soll} = VET_\text{Soll}$

Figur 2

Figur 3

**IN DER BESCHREIBUNG AUFGEFÜHRTE DOKUMENTE**

**In der Beschreibung aufgeführte Patentdokumente**

- WO 200246617 A